# EUROPEAN PATENT APPLICATION

(11) **EP 3 208 375 A1**
(43) Date of publication of application: **23.08.2017**
(21) Application number: 16156005.7
(22) Date of filing: 16.02.2016
(51) Int. Cl.: D04H 1/00, A47C 27/00, A47C 31/00, A47C 7/02, A47C 7/24, B29C 35/02, B29C 35/04, B29D 99/00, B60N 2/70, B68G 7/02, B68G 11/02, B68G 11/03, D04H 1/541, D04H 1/736

(54) **METHOD AND APPARATUS FOR PRODUCING A FIBROUS PRODUCT FROM A FIBROUS NON-WOVEN**

(71) Applicant: Schukra Gerätebau GmbH, 2560 Berndorf (AT)
(72) Inventor: KÖNCZÖL, Georg, 1220 Wien (AT); KRISTO, Darko, 2524 Teesdorf (AT)
(74) Representative: Banzer, Hans-Jörg

(57) **Abstract**

To produce a product from a fibrous non-woven which is formed from cross-linked fibers, at least one ambient condition of the fibrous non-woven is controlled during a recrystallization (54) of a material comprised by the fibrous non-woven

## Description

### FIELD OF THE INVENTION

Embodiments of the invention relate to products formed from fibers. Embodiments of the invention relate in particular to a method and an apparatus for processing a fibrous non-woven which is formed from thermally cross-linked fibers into a cushion body. Embodiments of the invention relate in particular to such a method and system for processing a fibrous non-woven into a cushion for use in vehicle seats, office seats, or residential seats.

### BACKGROUND OF THE INVENTION

Foams, such as polyurethane (PU) foams, are widely used as fabric backings for seats, such as for vehicle interior materials in the transportation industry. The foams are adhered to the backs of textile face materials. These foam backed composites have a cushion effect which can offer comfort or a luxurious feel in contact areas.

Polyurethane foam is widely used as cushioning material for seats. However, the polyurethane foam backed material can emit volatile substances, which may contribute to 'fogging' of vehicle or housing interiors and can furthermore include critical substances, which may negatively affect human health. Furthermore the foam itself may oxidize over time leading to a color change in the material. Recyclability is also an issue which has to be addressed.

For these and other reasons, there is a continued need for another material that would provide cushion properties similar to the ones of foam materials at similar costs. One class of materials which would be suitable for use in seat cushions is nonwovens, for example polyester nonwovens. These materials can provide a suitable backing to many face fabrics and address some of the needs which are difficult to address with conventional PU foam cushions.

Methods of producing mats of perpendicular laid, thermally bonded nonwovens, including air laid and "Struto" nonwoven techniques, have strived to provide a cushion with an economical and weight advantage to previous nonwoven technologies. Many of these techniques orient the staple fibers into a vertical position in a two-dimensional layer. By joining plural such preformed mats, a fiber cushion body may be formed.

Another technique for manufacturing a three-dimensional fiber cushion body includes inserting loose fiber material into a three-dimensional mold and supplying heat to the fibers inserted into the mold to cause thermal cross-linking. At least a fraction of the fibers may be oriented so as to predominantly align with a preferential before heat is supplied to effect thermal cross-linking. Such techniques have the advantage that a great variety of three-dimensional shapes may be formed.

Cushions which are formed from cross-linked fibers using the techniques outlined above may provide good breathability, but may be prone to failing in resiliency tests, e.g. tests which aim at determining the recovery time, recovery rate or degree of recovery after a load was placed onto the cushion. The test according to DIN EN ISO 1856:2001-3 (March 2001) or according to DIN EN ISO 1856:2008-08 (August 2008), which measures the remaining deformation after a load has been exerted onto a resilient body and the resilient body was allowed to recover from the load, is exemplary for such a test in which a three-dimensional fiber cushion body may be prone to show low performance. Similar problems may exist for other products which are formed from cross-linked fibers and for which resiliency characteristics are a relevant quality feature.

### SUMMARY

In view of the above, there is a continued need in the art for a method and apparatus of forming a cushion or other fibrous product which addresses some of the above needs, as well as a fibrous cushion formed using such techniques. There is in particular a need in the art for a method and system which improves resiliency characteristics, such as a recovery rate, recovery time and/or recovery degree after a load was placed onto the product.

According to embodiments, techniques are provided in which a fibrous non-woven formed from cross-linked fibers is subjected to a controlled recrystallization process. In the controlled recrystallization process, at least one ambient parameter may be controlled while a material comprised by the fibrous non-woven recrystallizes. In some implementations, a temperature and air humidity of a flow of gas which is passed through the fibrous non-woven may be controlled while a material comprised by the fibrous non-woven recrystallizes. The control of the at least one ambient parameter may be implemented in such a way that the duration through which the fibrous non-woven is maintained in a recrystallization temperature range in which the material recrystallizes is longer than a time threshold.

In some embodiments, the fibrous non-woven may comprise binding fibers which respectively comprise a first component and a second component formed from different materials. A melting temperature of the second component may be lower than a melting temperature of the first component. The controlled recrystallization process may comprise controlling at least one of a temperature or a humidity of a fluid to which the fibrous non-woven is exposed while the second component of the binding fibers recrystallizes.

According to an embodiment, there is provided a method of improving resiliency characteristics of a fibrous non-woven by performing a post-curing. The method of improving resiliency characteristics may comprise enlarging crystal sizes in the sheaths of binding fibers by a post-curing which depends on a recrystallization temperature of the sheath material of the binding fibers.

According to an embodiment, there is provided a method of producing a product from a fibrous non-woven which is formed from cross-linked fibers. The method comprises controlling at least one ambient condition of the fibrous non-woven during a recrystallization of a material comprised by the fibrous non-woven.

According to an embodiment, there is provided a method of producing a method of producing a cushion from fibers. The method comprises supplying fibers into a mold. The method comprises thermally activating at least a fraction of the fibers to produce a fibrous non-woven which is formed from cross-linked fibers, wherein the fibers have a preferential orientation along a main load direction in at least a portion of the fibrous non-woven. The method comprises producing a cushion from the fibrous non-woven using a controlled recrystallization process in which at least one ambient condition of the fibrous non-woven is controlled during a recrystallization of a material comprised by the fibrous non-woven.

According to an embodiment, there is provided a cushion which is produced using the method according to an embodiment.

According to an embodiment, there is provided an apparatus for forming a product from a fibrous non-woven, the apparatus comprising a receptacle to receive the fibrous non-woven comprising cross-linked fibers, and a control system configured to control at least one ambient condition of the fibrous non-woven during a recrystallization of a material comprised by the fibrous non-woven.

The controlled recrystallization performed in methods and by apparatuses according to embodiments improves the resilient characteristics of a product produced from fibers. In particular, resiliency characteristics such as a recovery rate, recovery time or recovery degree after a load was applied to the product may be improved by performing a controlled recrystallization in which a temperature and/or humidity of a gas is controlled to which a fibrous non-woven is exposed while a low-melt component of a binding fiber recrystallizes.

Embodiments of the invention will be described with reference to the accompanying drawings.

### BRIEF DESCRIPTION OF THE DRAWINGS

FIG. 1 is a schematic view of a fibrous product according to an embodiment.
FIG. 2 is a flow chart of a method according to an embodiment.
FIG. 3 is a schematic view of different fiber types which may be comprised by a fibrous product according to an embodiment.
FIG. 4 is a graph representing a temperature as a function of time in a process of forming a fibrous non-woven and of processing the fibrous non-woven into a cushion according to an embodiment.
FIG. 5 is a graph representing a temperature as a function of time in a process of forming a fibrous non-woven and of processing the fibrous non-woven into a cushion according to an embodiment.
FIG. 6 shows graphs representing a temperature and air humidity as a function of time in a process of forming a fibrous non-woven and of processing the fibrous non-woven into a cushion according to an embodiment.
FIG. 7 is a flow chart of a method according to an embodiment.
FIG. 8 is a flow chart of a method according to an embodiment.
FIG. 9 is a schematic view of a system comprising an apparatus according to an embodiment.
FIG. 10 is a schematic view of an apparatus according to an embodiment.
FIG. 11 is a schematic view of an apparatus according to an embodiment.
FIG. 12 shows a differential scanning calorimetry (DSC) curve of a binding fiber comprised by a fibrous product according to an embodiment.
FIG. 13 shows results of a resiliency test performed on fibrous products produced using a method and apparatus according to an embodiment in comparison to results of the same test performed on a fibrous product which was not subjected to a controlled recrystallization by post-curing.
FIG. 14 shows results of a resiliency test performed on fibrous products produced using a method and apparatus according to an embodiment in comparison to results of the same test performed on a fibrous product which was not subjected to a controlled recrystallization by post-curing.
FIG. 15 shows results of a resiliency test performed on fibrous products produced using a method and apparatus according to an embodiment in comparison to results of the same test performed on a fibrous product which was not subjected to a controlled recrystallization by post-curing.
FIG. 16 shows results of a resiliency test performed on fibrous products produced using a method and apparatus according to an embodiment in comparison to results of the same test performed on a fibrous product which was not subjected to a controlled recrystallization by post-curing.
FIG. 17 shows results of a resiliency test performed on fibrous products produced using a separate post-curing step and fibrous products produced with a controlled recrystallization during the cool-down from thermal activation.
FIG. 18 shows results of a resiliency test performed on fibrous products produced using a separate post-curing step and fibrous products produced with a controlled recrystallization during the cool-down from thermal activation.

### DETAILED DESCRIPTION OF EMBODIMENTS

Exemplary embodiments of the invention will now be described with reference to the drawings. While some embodiments will be described in the context of specific fields of application, the embodiments are not limited to this field of application. Further, the features of the various embodiments may be combined with each other unless specifically stated otherwise.

While some embodiments will be described in the context of products which are cushions for vehicle seats, residential furniture or other seating or bedding furniture, the apparatuses, systems and methods according to embodiments may also be used for forming other resilient fibrous products.

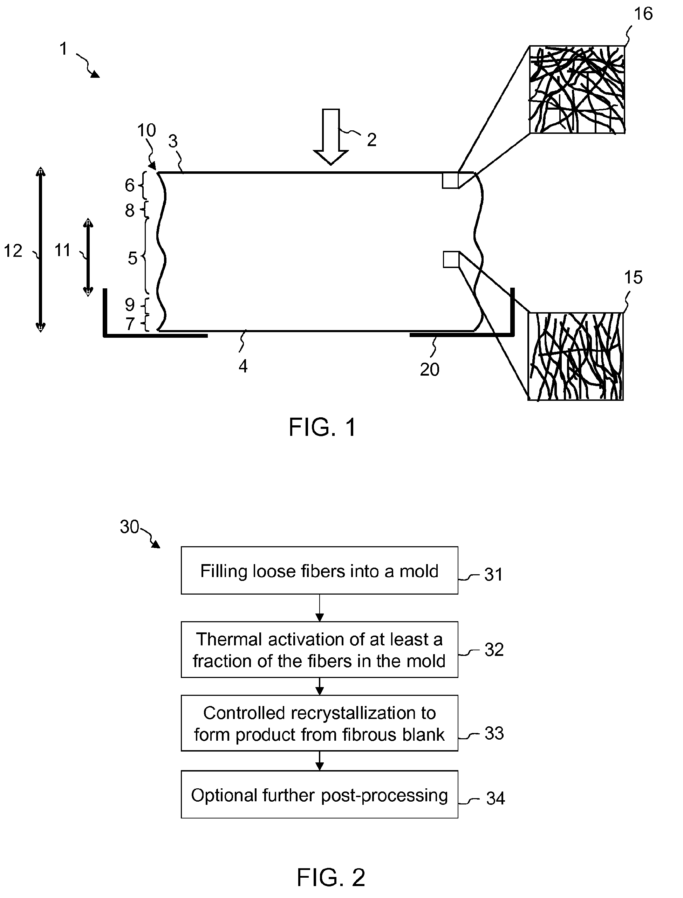

FIG. 1 is a schematic view of a fibrous product 10 which may be produced with a method according to an embodiment. The fibrous product 10 may be a cushion. The fibrous product 10 may be a cushion for installation in a vehicle seat, residential or office seating furniture, mattresses, or other furniture.

Referring to FIG. 1, the fibrous product 10 which is treated in the method and apparatus according to an embodiment may be configured for use as a seat cushion. The fibrous product is configured to provide resilient characteristics when a force directed along a main load direction 2 is exerted onto the fibrous product 10.

The fibrous product 10 may be upholstery for supporting a user's thighs or back in a vehicle seat. The fibrous product 10 may be upholstery for seating or bedding furniture in residential or office use.

The fibrous product 10 has two major faces 3, 4 which are arranged so as to be opposite to each other on the fibrous product 10. The major faces 3, 4 may have an approximately planar shape, extending essentially perpendicularly to the main load direction 2. The fibrous product 10 may be configured such that the main load direction 2 defines a normal to the plane of the major faces 3 and 4.

The fibrous product 10 may be a unitary body which is integrally formed from thermally cross-linked fibers. The fiber material forming the fibrous product may include at least two different types of fibers, namely a binding fiber and a matrix fiber. The binding fiber may be a fiber which can be thermally activated by supplying heat thereto. Upon thermal activation, at least a portion of each binding fiber melts, thereby causing a matrix of fibers to form. Various known fiber types may be used as binding and matrix fibers. The fiber material from which the fibrous product is formed may include fibers that can be obtained from recycling material and/or which can be recycled in an efficient manner. The binding fibers may be bi-component (BiCo) fibers. The binding fibers may have a thermal activation temperature which is lower than a melting temperature of the matrix fibers. According to exemplary embodiments, the binding fibers may be BiCo fibers having a core of polyester or polyamide, and having a coating of polyamide or modified polyester. The BiCo fibers may have a trilobal shape in crosssection. The matrix fibers may be formed from polyester or polyamide and have a melting temperature higher than at least the melting temperature of the coating of the binding fibers. The matrix fibers may have a linear mass density of in between 10 and 100 dtex. The binding fibers may have a linear mass density of in between 7 and 40 dtex. The fiber material from which the fibrous product is formed may include more than one type of matrix fiber and/or more than one type of binding fiber.

In some embodiments, the matrix fibers are formed from polyamide and the binding fibers comprise a core of polyamide and a shell of modified polyamide.

The fibrous product 10 may include a plurality of different portions 5-7. The portions may be distinguished from each other with regard to a characteristic fiber orientation and/or a density of the fibrous product 10. There fibrous product 10 may be configured such that there are no sharp boundaries between the different portions 5-7. The fibrous product 10 may exhibit gradual transitions in fiber orientation or fibrous product density between the different portions.

The fibrous product 10 may have a first portion which may be a resilient portion 5. In the resilient portion 5, the fibers are preferentially oriented along the a main load direction 2 of the fibrous product 10. I.e., a preferential direction of the fibers in the resilient portion corresponds to the main load direction 2 and is perpendicular to at least one major face 3 of the fibrous product 10. Due to the formation of the fiber matrix, fiber shapes and statistical distributions in fiber orientation, not all fiber fibers will be directed along the main load direction 2 in the resilient portion. The resilient portion 5 may be considered to have a fiber orientation along the main load direction 2 if more than 50% of the fibers are respectively oriented at an angle of less than 45° to the main load direction 2. In other words, in the resilient portion 5, the majority of fibers is disposed at angle of more than 45° relative to the plane of the major face 3.

The fiber configuration in the resilient portion 5 is schematically indicated at the inset 15. As seen in the inset 15, a majority of the fibers in the resilient portion 5 may be oriented at an angle of less than 45° to the main load direction 2. The fiber spacing may be sufficiently large so as to allow the fibers to deflect when a load directed along the main load direction 2 is applied onto the fibrous product. Cross-linking fibers, which interconnect the fibers which are mainly disposed parallel to the main load direction 2, allow a fiber matrix to be formed in the resilient portion 5.

The fibrous product 10 may also include at least one second portion 6, 7 disposed at the major faces 3 and 4, respectively. The at least one second portion 6 and 7, respectively, are distinguished from the resilient portion 5 with regard to at least one of fiber orientation or fibrous product density. In the fibrous product 10 of FIG. 1, the fibers in the at least one second portion 6 and 7 respectively have a preferential direction parallel to the plane of the major face at which they are disposed. The density of the fibrous product at the major faces 3 or 4 may be greater than a density in the resilient portion 5. Alternatively, such an increased density may also be generated by post-processing operations, e.g. by applying ultrasonic energy or electromagnetic radiation energy.

The fiber configuration in the further portion 6 disposed at the major face 3 is schematically indicated at the inset 16. As seen in the inset 16, a majority of the fibers in the portion 6 may be oriented at an angle of less than 45° to the plane of the major face 3, and the fibers may have a packing density greater than in the resilient portion 5. The further portion 7 disposed on the other major face 4 may have a configuration, with regard to fiber orientation and fibrous product density, which is similar to the one in the portion 6.

The fibrous product 10 may exhibit gradual transitions in fiber orientation and density between the resilient portion 5 and the at least one second portion 6 and 7, respectively. The fibrous product 10 may comprise a transition portion 8 which is disposed in between the resilient portion 5 and the second portion 6 on the major face 3. In the transition portion 8, the fiber orientation may vary gradually from the fiber orientation of the resilient portion 5 to the fiber orientation of the second portion 6 on the major face 3. Alternatively or additionally, the density of the fibrous product may vary gradually from the density of the resilient portion to the density of the further portion 6 on the major face 3.

The fibrous product 10 may comprise a transition portion 9 which is disposed in between the resilient portion 5 and the second portion 7 on the major face 4. In the transition portion 9, the fiber orientation may vary gradually from the fiber orientation of the resilient portion 5 to the fiber orientation of the further portion 7 on the major face 4. Alternatively or additionally, the density of the fibrous product may vary gradually from the density of the resilient portion 5 to the density of the further portion 7 on the major face 4.

The fibrous product 10 thus formed as a unitary three-dimensional body may have a height 12 which may be greater than 4 cm. The resilient portion 5 may have a height 11 and may be disposed so as to be spaced from both major faces 3 and 4.

In the fibrous product 10, the resilient portion 5 having the fiber orientation along the main load direction 2 provides good ventilation. With the fibrous product 10 being formed in a unitary manner from thermally cross-linked fibers, good durability and comfort are attained.

As will be explained in more detail with reference to FIG. 2 to FIG. 18 in the following, the fibrous product 10 is formed by subjecting a fibrous non-woven to a controlled recrystallization process. The fibrous non-woven may be formed by thermally cross-linking fibers. The fibrous non-woven may have the features explained with reference to FIG. 1 supra. In particular, the fibrous non-woven may be formed from cross-linked fibers, with the fibers disposed in at least a portion of the fibrous non-woven having a preferential orientation along the main load direction 2 such that at least 50% of the fibers are oriented at an angle of less than 45 % from the main load direction 2.

As used herein, the term "fibrous non-woven" is used to refer to an unfinished product which is subjected to post-processing to form a product. The fibrous non-woven may in particular be a fibrous non-woven body formed from thermally cross-linked fibers. The fibrous non-woven body may have a height in excess of 40 mm, for example, measured at its maximum thickness.

The fibrous non-woven may include a material which is thermally activated to cross-link the fibers. The material may be comprised by binding fibers. For illustration, binding fibers may comprise a first material, which may form a core, and a second material, which may form a shell of the respective binding fiber, with the second material having a melting temperature which is lower than that of the first material. To effect thermal cross-linking to form the fibrous non-woven, heating may be performed to a temperature which is higher than the melting temperature of the second material of the binding fibers.

As will be described in more detail below, the controlled recrystallization may be performed by controlling one or several ambient conditions of the fibrous non-woven while the material which is molten to effect cross-linking of fibers recrystallizes. For illustration, the controlled recrystallization may be performed by controlling one or several ambient conditions of the fibrous non-woven while the shell of binding fibers recrystallizes.

The controlled recrystallization may be attained by controlling a temperature change rate of the fibrous non-woven and/or a humidity of an atmosphere in which the fibrous non-woven is disposed in dependence on whether the shell of binding fibers recrystallizes.

The fibrous product according to an embodiment may comprise cross-linked fibers. In at least a portion of the fibrous product, at least 50% of the fibers may have a preferential orientation along a load direction of the fibrous product, i.e., at least 50% of the fibers may enclose an angle of less than 45° with the main load direction. The fibrous product may be configured such that, when the fibrous product is compressed to 50% of its original height for 22 hours while being maintained in an atmosphere having a temperature of 70°C and a relative air humidity of less than 10%, the fibrous product recovers so that it has at least 85% of its original height 30 minutes after the compression is terminated, with the fibrous product being allowed to recover in an atmosphere having a temperature of (23 ± 2)°C and a relative air humidity of (50 ± 5)%.

The fibrous product may be configured such that, when the fibrous product is compressed to 50% of its original height for 22 hours while being maintained in an atmosphere having a temperature of 70°C and a relative air humidity of less than 10%, the fibrous product recovers so that it has at least 88% of its original height 30 minutes after the compression is terminated, with the fibrous product being allowed to recover in an atmosphere having a temperature of (23 ± 2)°C and a relative air humidity of (50 ± 5)%.

The fibrous product may be configured such that, when the fibrous product is compressed to 50% of its original height for 22 hours while being maintained in an atmosphere having a temperature of 70°C and a relative air humidity of less than 10%, the fibrous product recovers so that it has at least 90% of its original height 30 minutes after the compression is terminated, with the fibrous product being allowed to recover in an atmosphere having a temperature of (23 ± 2)°C and a relative air humidity of (50 ± 5)%.

Such resiliency characteristics and, in particular, recovery characteristics are attainable by subjecting the fibrous product to a post-curing which controls the recrystallization of a binding agent, e.g. a low-melt component of a binding fiber.

The fibrous product may comprise matrix fibers and binding fibers. Each binding fiber may respectively comprise a first component and a second component, the second component having a melting temperature which is lower than a melting temperature of the first component. The second component may be a Co-Polyamide (CoPA).

The fibrous product may be formed such that a size of crystals of the second component of the binding fibers is increased by a post-curing, which is implemented in dependence on a recrystallization temperature of the second component. The fibrous product may comprise, in the sheaths of the binding fiber, crystals having a larger size than without post-curing.

A method of producing a product from a fibrous non-woven which is formed from cross-linked fibers according to an embodiment comprises controlling at least one ambient condition of the fibrous non-woven during a recrystallization of a material comprised by the fibrous non-woven. By virtue of such a controlled recrystallization process, resiliency characteristics of the product formed from the fibrous non-woven are improved.

As used herein, the term "ambient condition" relates to a condition of an atmosphere in which the fibrous non-woven is disposed. The ambient condition may include any one or any combination of a temperature of a gaseous fluid in which the fibrous non-woven is disposed or which is actively passed through the fibrous non-woven, a humidity of a gaseous fluid in which the fibrous non-woven is disposed or which is actively passed through the fibrous non-woven and/or an energy density of electromagnetic radiation in a region in which the fibrous non-woven is disposed.

Controlling the at least one ambient condition may comprise controlling at least one parameter of a fluid to which the fibrous non-woven is exposed during the recrystallization. A high degree of control over ambient conditions may be attained, which may include temperature and humidity of a gaseous fluid to which the blank is exposed.

Controlling the at least one parameter of the fluid may comprise controlling a temperature of the fluid to which the fibrous non-woven is exposed. A core temperature of the fibrous non-woven may be kept in a recrystallization temperature range for at least a predetermined time period by controlling the temperature of the fluid.

The fluid maybe passed through the fibrous non-woven. Efficient control over ambient conditions may be attained thereby.

The temperature of the fluid may be controlled in dependence on a recrystallization temperature range in which the material comprised by the fibrous non-woven recrystallizes. A core temperature of the fibrous non-woven may be kept in the recrystallization temperature range for at least a predetermined time period by controlling the temperature of the fluid.

A rate of change of the temperature of the fluid may be controlled in dependence on a blank temperature of the fibrous non-woven.

The rate of change of the temperature of the fluid may be selectively decreased if the blank temperature is within the recrystallization temperature range, to thereby prolong the time in which the material comprised by the fibrous non-woven is allowed to recrystallize.

Controlling the at least one parameter may comprise controlling an amount of water vapour or a rate at which water vapour is supplied to the fluid to which the fibrous non-woven is exposed. By controlling humidity in addition or alternative to temperature of the fluid to which the fibrous non-woven is exposed, resilient characteristics may be improved further.

The fluid may comprises a gas, in particular air. The fluid may be passed through the fibrous non-woven from an inlet channel to an outlet channel through a receptacle disposed between the inlet and outlet channels, with the fibrous non-woven being received in the receptacle.

Controlling the at least one ambient condition may comprise controlling a radiation source which supplies electromagnetic radiation to the fibrous non-woven. A core temperature of the fibrous non-woven may thereby be controlled during the recrystallization of a low-melt component of a binding fiber, for example. The core temperature may be maintained within a recrystallization temperature range in which a binding agent, e.g. a low-melt component of binding fibers, recrystallizes.

The fibers may comprise binding fibers, each binding fiber respectively comprising a first component and a second component, the second component having a melting temperature which is lower than a melting temperature of the first component. The at least one ambient condition may be controlled in dependence on a recrystallization temperature range in which the second component of the binding fibers recrystallizes.

The recrystallization temperature range may be determined by differential scanning calorimetry. The crystallization temperature range may be determined by differential scanning calorimetry at a cooling rate of at least 1 K/min, in particular at a cooling rate of at least 3 K/min, in particular at a cooling rate of 5 K/min or more than 5 K/min.

The second component of a binding fiber may at least partially surround the first component. The second component may form a shell disposed around a core. The shell and the core are formed from different materials.

Controlling the at least one ambient condition may comprise controlling a rate of change of a blank temperature of the fibrous non-woven.

During cooling from a thermal activation temperature at which thermal cross-linking of fibers is effected to a final temperature which is lower than the recrystallization temperature of the fibers included in the fibrous non-woven, the temperature change rate of the fibrous non-woven may be selectively decreased while the recrystallization of the material takes place which was previously molten to effect the thermal cross-linking.

Controlling the rate of change of the blank temperature may comprise selectively decreasing the rate of change of the blank temperature in response to an onset of the recrystallization. Improved resiliency characteristics may be attained thereby.

Controlling the at least one ambient parameter during the recrystallization may be performed prior to cooling the fibrous non-woven to a temperature lower than a minimum temperature of a recrystallization temperature range in which the material recrystallizes. Thereby, the thermal treatment which improves resiliency characteristics may be performed during cool-down after thermal cross-linking, which provides an energy efficient implementation.

The method may comprise cooling the fibrous non-woven to a temperature lower than a minimum temperature of a recrystallization temperature range in which the material recrystallizes, and subsequently heating the fibrous non-woven to a temperature higher than the minimum temperature of the recrystallization temperature range to control the at least one ambient parameter. Thereby, the controlled recrystallization may be performed separately from the thermal activation, providing enhanced versatility in process control.

The controlled recrystallization by controlling at least one ambient parameter may be performed in dependence on a recrystallization temperature range of the material which is thermally activated upon formation of the fibrous non-woven. The recrystallization temperature range may be determined by differential scanning calorimetry. The recrystallization temperature range may be determined by differential scanning calorimetry at a heating and cooling rate of at least 1 K/min, in particular of at least 3 K/min, in particular of 5 K/min or more than 5 K/min.

The cross-linked fibers may have a preferential orientation along a main load direction in at least a portion of the fibrous non-woven.

The controlled recrystallization process in which at least one ambient condition of the fibrous non-woven is controlled may be implemented such that the fiber orientation is not changed thereby. The fibrous product formed by the method may be configured such that the fibers have a preferential orientation along a main load direction in at least a portion of the fibrous product.

The product may be a cushion.

The method may comprise optional post-processing of the cushion, e.g. by implementing shape modifications using ultrasound or laser cutting techniques, attachment of cover material and/or trimming.

The method may comprise installing the cushion in a seat.

The seat may be a vehicle seat or a seat of a furniture for office or residential use.

The fibrous non-woven may be formed from fibers which are supplied into the mold. The fibers supplied into the mold may be fibers which are not cross-linked.

A method of producing a cushion from fibers according to an embodiment comprises supplying fibers into a mold, thermally activating at least a fraction of the fibers to produce a fibrous non-woven which is formed from cross-linked fibers, wherein the fibers have a preferential orientation along a main load direction in at least a portion of the fibrous non-woven, and producing a cushion from the fibrous non-woven using the method of any one of the embodiments disclosed herein.

According to another embodiment, there is provided a fibrous product, in particular a cushion, which is formed using the method of any one of the embodiments disclosed herein.

An apparatus for forming a product from a fibrous non-woven according to an embodiment comprise a receptacle to receive the fibrous non-woven comprising cross-linked fibers, and a control system configured to control at least one ambient condition of the fibrous non-woven during a recrystallization of a material comprised by the fibrous non-woven.

The apparatus may be configured to perform the method of any one of the embodiments disclosed herein.

The control system may comprise a fluid guide system configured to pass a gaseous fluid through the fibrous non-woven.

The control system may comprise a temperature control system configured to control a temperature of the gaseous fluid during a recrystallization of a material of the fibrous non-woven which was thermally activated for thermal cross-linking of the fibers.

The control system may comprise a humidity control system configured to control a humidity of the gaseous fluid during a recrystallization of a material of the fibrous non-woven which was thermally activated for thermal cross-linking of the fibers.

The control system may comprise a source of electromagnetic radiation configured to control an energy density of electromagnetic radiation during a recrystallization of a material of the fibrous non-woven which was thermally activated for thermal cross-linking of the fibers.

With reference to FIG. 2 to FIG. 12, embodiments of the invention will be described in more detail.

FIG. 2 is a flow chart of a method 30 according to an embodiment. The method 30 may be performed using an apparatus according to an embodiment. The method 30 may be used to form a fiber cushion body or another fibrous product from fibers. In the process, the fibers may be cross-linked, e.g. by thermal activation. A controlled recrystallization process may be implemented thereafter to improve the resiliency characteristics.

At 31, fibers may be filled into a mold. The fibers filled into the mold may be loose fibers which are not thermally cross-linked. Supplying fibers into the mold may comprise cutting yarns into segments, with the filaments of the cut yarn segments being supplied into the mold as fibers. Supplying fibers into the mold may comprise separating the filaments of the cut yarn segments from each other in an air flow.

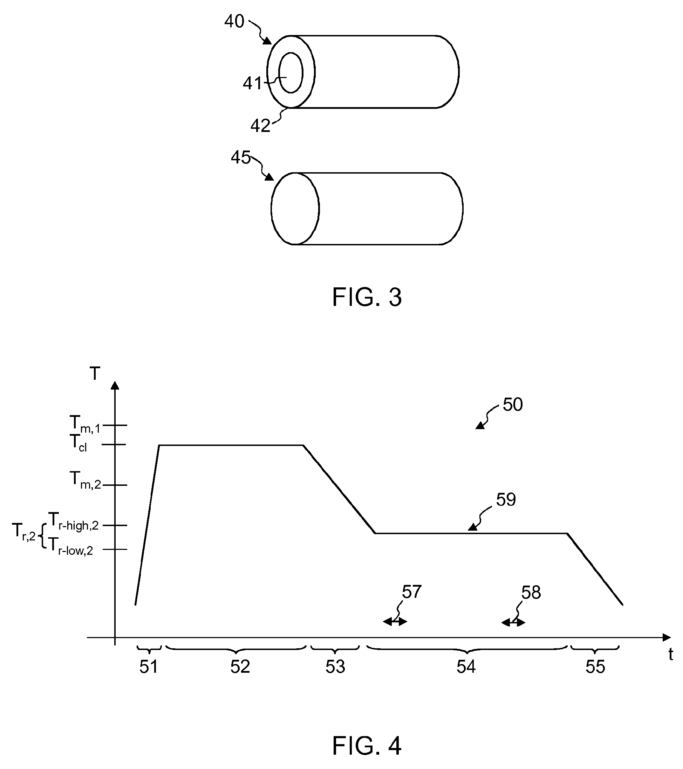

At 32, at least a fraction of the fibers may be thermally activated. The fibers may comprise binding fibers, as will be explained in more detail with reference to FIG. 3. The binding fibers may comprise a first component and a second component, the first and second components being formed from different material and having different melting temperatures. The second component may have a melting temperature which is less than that of the first component. Thermal activation may include heating the fibers to a temperature which is higher than a melting temperature of the second component of the binding fibers, but which is less than a melting temperature of the first component of the binding fibers. The fibers may further comprise matrix fibers which are different from the binding fibers. Thermal activation may include heating the fibers to a temperature which is higher than a melting temperature of the second component of the binding fibers, but which is less than a melting temperature of both the first component of the binding fibers and a melting temperature of the matrix fibers.

While thermal cross-linking may be effected using binding fibers, thermal cross-linking may also be implemented in other ways, e.g. by using a bonding material separate from the fibers which is thermally activated. The bonding material may be a powder, for example. A blend of bonding material and fibers may be supplied into the mold, with the bonding material being thermally activated to form a fibrous non-woven.

According to embodiments, the fibrous non-woven produced at 32 is subjected to a controlled recrystallization process at 33.

At 33, a controlled recrystallization of the material of the fibrous non-woven is effected, which material was previously molten to effect thermal cross-linking of the fibers. The controlled recrystallization may comprise controlling at least one ambient condition of the fibrous non-woven while the material recrystallized. The at least one ambient condition may include any one or any combination of a temperature of a gaseous fluid in which the fibrous non-woven is disposed or which is actively passed through the fibrous non-woven and/or a humidity of a gaseous fluid in which the fibrous non-woven is disposed or which is actively passed through the fibrous non-woven and/or an energy density of electromagnetic radiation in a region in which the fibrous non-woven is disposed.

The controlled recrystallization performed at 33 provides a fibrous product which has resiliency characteristics that are improved compared to the fibrous non-woven obtained at 32.

The fibrous product obtained after the controlled recrystallization at 33 may exhibit a recovery rate, a recovery time and/or a recovery degree after a load was placed thereon which is superior compared to the recovery characteristics of the fibrous non-woven obtained at 32.

At 34, the fibrous product may optionally undergo further processing. For illustration, the shape of the fibrous product may be modified using ultrasound or laser cutting techniques. Alternatively or additionally, trim channels may be formed. Alternatively or additionally, a cover material may be attached to the fibrous product.

The fibrous product may be a cushion formed from fibers. The method 30 may comprise installing the cushion in a seat. The seat may be a vehicle seat or a seat of a furniture for office or residential use. Automobile seats, aircraft seats, or train seats are exemplary for seats in which the cushion may be installed.

The fibrous product and the fibrous non-woven from which it is produced may comprise fibers of at least two different fiber types. At least one of the fiber types may consist of different components. For illustration, bi-component (BiCo) fibers may be used.

The fibrous product and the fibrous non-woven from which it is produced may comprise matrix fibers and binding fibers. The matrix fibers may be single-component fibers formed of one material component only. The binding fibers may comprise at least two different components, distinguished from each other in melting temperature.

FIG. 3 is a schematic view of different fibers which may be comprised by the fibrous product and the fibrous non-woven from which the fibrous product is produced. A blend of fibers may comprise fibers 45 which are matrix fibers and fibers 40 which are binding fibers.

The binding fibers 40 may respectively comprise a first component 41 and a second component 42. The second component 42 may have a melting temperature which is less than a melting temperature of the first component 41.

The first component 41 may form a core of the binding fiber, and the second component 42 may form a shell of the binding fiber. The shell may at least partially surround the core. Other configurations may be used which allow the second component 42 to melt and to effect thermal cross-linking of fibers when the fibers are heated to a temperature at which the first component 41 and the matrix fibers 45 do not melt, yet.

As will be described in more detail with reference to FIG. 4 to FIG. 12, resiliency characteristics of the fibrous product may be improved compared to the fibrous non-woven by controlling one or more conditions of the atmosphere to which the fibrous non-woven is exposed while the material which is molten for cross-linking the fibers recrystallizes. For illustration, the temperature and/or humidity of air or of another fluid to which the fibrous non-woven is exposed while the second component 42 of the binding fibers 40 recrystallizes may be controlled during that recrystallization.

FIG. 4 is a diagram 50 representing a temperature of fiber material during a process of forming the fibrous non-woven and subsequent processing of the fibrous non-woven into a fibrous product. In the exemplary diagram 50, it is assumed that the fibers from which the fibrous non-woven is formed comprise binding fibers having a first component and a second component, as explained with reference to FIG. 3.

A melting temperature of the first component of the binding fiber, which may be the core of the binding fiber, is designated as Tₘ,₁. A melting temperature of the second component of the binding fiber, which may be the shell of the binding fiber, is designated as T_{m,2}.

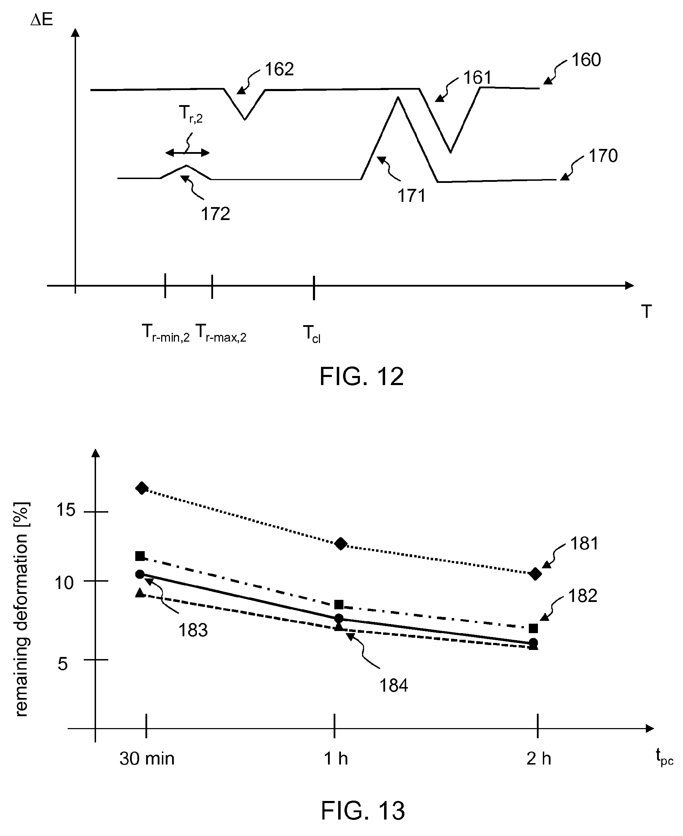

Recrystallization of the second component upon cooling from a temperature which exceeds the melting temperature T_{m,2} of the second component takes place at temperatures within a recrystallization temperature range T_{r,2} of the second component. The recrystallization temperature range T_{r,2} of the second component of the second component may be ascertained by differential scanning calorimetry, as will be explained in more detail with reference to FIG. 12.

The recrystallization temperature range T_{r,2} of the second component is delimited by a minimum recrystallization temperature T_{r-min,2} and a maximum recrystallization temperature T_{r-max,2}. The minimum recrystallization temperature T_{r-min,2} and the maximum recrystallization temperature T_{r-max,2} may be ascertained by differential scanning calorimetry (DSC), as will be explained in more detail with reference to FIG. 12.

The process control is implemented in such a manner that loose fiber material is heated to a temperature T_{cl} to effect thermal cross-linking in a heating phase 51. If a binding agent separate from the fibers is used, the binding agent is also heated. Heating may be implemented by passing a flow of warm gas through the loose fiber material while the loose fiber material is retained in a mold.

The heating phase 51 heats the fiber material to a temperature T_{cl} at which thermal cross-linking occurs to form a fibrous non-woven. If the fibers comprise binding fibers having a first component and a second component, the second component having a lower melting temperature T_{m,2} than the first component, the temperature T_{cl} will be selected to be greater than the melting temperature T_{m,2} of the second component of the binding fibers and less than the melting temperature T_{m,1} of the first component of the binding fibers. If the fibers comprise matrix fibers, the temperature T_{cl} will be further selected to be less than the melting temperature of the matrix fibers.

After the heating phase, in a cross-linking phase 52 the fibrous non-woven may be formed by thermal cross-linking. The fiber material may be kept at a temperature which is equal to the temperature T_{cl} or at a temperature which is included in a temperature interval about the temperature T_{cl}. A heated gas having a temperature of at least T_{cl} may be passed through the fiber material in the mold during the cross-linking phase 52.

After thermal cross-linking has been effected, a cooling phase 53 may be initiated to allow the second component of the binding fibers or other binding agent to consolidate. Consolidation of the fibrous non-woven may thereby be attained.

As schematically indicated in FIG. 4, the cooling phase 53 may be performed in such a way that the fibrous non-woven is not directly cooled down to room temperature. The cooling phase 53 may be interrupted at a temperature included in a recrystallization temperature range T_{r,2} of the second component of the binding fibers or in a recrystallization temperature range of another binding agent, to perform a controlled recrystallization process.

In a controlled recrystallization phase 54, temperature and/or humidity of a gaseous fluid may be controlled to which the fibrous non-woven is exposed. As illustrated in FIG. 4, a cooling rate of the fibrous non-woven may be decreased compared to the cooling phase 53 to maintain the fibrous non-woven at a temperature included in the recrystallization temperature range T_{r,2} for at least a pre-defined time. For illustration, the cooling may be interrupted in response to the fibrous non-woven reaching a temperature in which the second component of the binding fibers recrystallize. The gaseous fluid to which the fibrous non-woven is exposed may be heated to a temperature which is selected as a function of the recrystallization temperature range T_{r,2} of the second component of the binding fibers. If a binding agent other than the second component of the binding fibers is used, the cooling rate of the fibrous non-woven may be decreased compared to the cooling phase 53 to maintain the fibrous non-woven at a temperature included in the recrystallization temperature range of the binding agent.

The temperature control in the controlled recrystallization phase 54 may be implemented in an energy efficient manner by passing a gaseous fluid through the fibrous non-woven. The temperature of the gaseous fluid may be adjusted in a control loop, in particular in a closed-loop control. The temperature of the gaseous fluid after passage through the fibrous non-woven may be measured and a heating device along which the gaseous fluid is passed may be controlled so as to ensure that the fibrous non-woven is maintained at a temperature within the recrystallization temperature range T_{r,2} during the controlled recrystallization phase.

In addition or as an alternative to temperature control, the humidity of the fibrous non-woven may also be controlled while the second component of the binding fibers recrystallizes. For illustration, a humidity of a gaseous fluid may be increased by supplying water droplets or water vapour into the gaseous fluid to which the fibrous non-woven is exposed. Supply of water droplets or water vapour may be performed continuously or intermittently in the controlled recrystallization phase 54. For illustration, water droplets or water vapour may be supplied intermittently in intervals 57, 58, e.g. after the cooling phase 53 and prior to the final cooling phase 55. Water droplets or water vapour may be supplied to increase the air humidity. An open loop control or closed-loop control may be implemented. For illustration, a supply device which supplies water droplets or water vapour to the gaseous fluid before it is passed through the fibrous non-woven may be controlled as a function of the air humidity of the gaseous fluid. The supply device which supplies water droplets or water vapour to the gaseous fluid before it is passed through the fibrous non-woven may be controlled as a function of the air humidity of the gaseous fluid so as to ensure that a relative or absolute humidity remains greater than a threshold in the controlled recrystallization phase 54.

Control over conditions in which the recrystallization takes place in the controlled recrystallization phase 54 improves the resiliency characteristics of the product. In particular, products which have undergone the controlled recrystallization phase 54 are less prone to failing in a test as specified in DIN EN ISO 1856:2001-3 (March 2001) or according to DIN EN ISO 1856:2008-08 (August 2008) or other resiliency test than products which are quickly cooled through the recrystallization temperature range T_{r,2}, without exerting any control over ambient conditions of the fibrous non-woven in that time.

Subsequent to the controlled recrystallization phase 54, a further cooling phase 55 may be implemented. The product formed in the controlled recrystallization phase may be cooled to room temperature. Active cooling may, but does not need to be used to cool the product to room temperature.

The product formed by the processing explained with reference to FIG. 4 may undergo further post-processing. For illustration, the shape of the fibrous product may be modified using ultrasound or laser cutting techniques. Alternatively or additionally, trim channels may be formed. Alternatively or additionally, a cover material may be attached to the fibrous product. The fibrous product may be a cushion which is installed in a seat. The seat may be a vehicle seat or a seat of a furniture for office or residential use. Automobile seats, aircraft seats, or train seats are exemplary for seats in which the cushion may be installed.

A controlled recrystallization procedure implemented as explained with reference to FIG. 4 is implemented in such a way that the controlled recrystallization takes place after a first cooling phase 53 from the cross-linking temperature T_{cl} and before the fibrous non-woven or cushion is cooled to room temperature. Energy costs are particularly low for such a process.

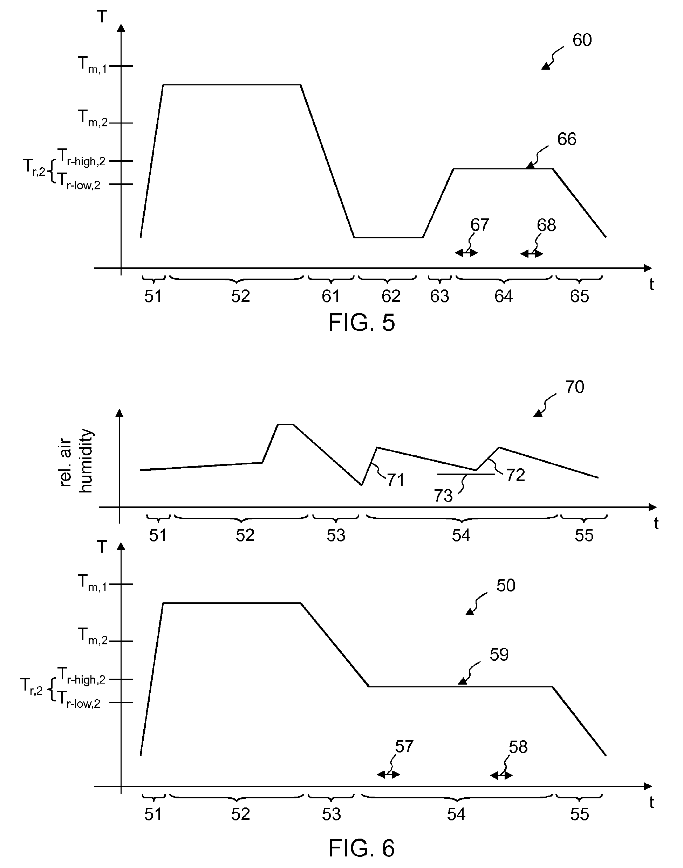

FIG. 5 is a diagram 60 representing a temperature of fiber material during a process of forming the fibrous non-woven and subsequent processing of the fibrous non-woven into a fibrous product. In the exemplary diagram 60, it is assumed that the fibers from which the fibrous non-woven is formed comprise binding fibers having a first component and a second component, as explained with reference to FIG. 3.

In the process of FIG. 5, a controlled recrystallization is performed. The temperature, humidity or other ambient conditions of the fibrous non-woven are controlled while the second component of the binding fibers or another binding agent recrystallizes. In the process of FIG. 5, the fiber cushion blank is first cooled through the recrystallization temperature range. At a later time, the fiber cushion blank is heated to a temperature within the recrystallization temperature range T_{r,2} to effect a controlled recrystallization of the second component of the binding fibers which improves resiliency characteristics.

In order to form the blank, fibers may be heated in a heating phase 51 and thermal cross-linking may be effected in a thermal cross-linking phase 52. These phases may be implemented as described with reference to FIG. 4.

In a cooling phase 61, the fibrous non-woven may be cooled through the recrystallization temperature range T_{r,2}. At the end of the cooling phase 61, the temperature may reach a temperature which is less than the minimum temperature of the recrystallization temperature range T_{r,2}.

To improve resiliency characteristics, a controlled recrystallization is performed subsequently. The fibrous non-woven obtained at the end of the cooling phase 61 may be stored even for extended time periods and/or may be transported to another location to perform the controlled recrystallization. The duration of the waiting phase 62 is not germane to the improvement attained by the subsequent controlled recrystallization. The waiting phase 62 may have a duration which may be as short as a few minutes, but which may be in excess of one or several days, one or several weeks, or even one or several months.

The controlled recrystallization may be implemented by heating the fibrous non-woven in a heating phase 63 to start the controlled recrystallization. The fibrous non-woven may be heated to a temperature within a recrystallization temperature range T_{r,2} of the second component of the binding fibers. It should be appreciated that recrystallization may occur at different temperatures depending on whether the second component of the binding fibers or another binding agent are caused to recrystallize by heating them or by cooling them. I.e., the recrystallization temperature range T_{r,2} of the second component in the process of FIG. 5 may be different from that in the process of FIG. 4, because the second component is caused to recrystallize by heating in FIG. 5 rather than by cooling as in FIG. 4.

In a controlled recrystallization phase 64, temperature and/or humidity of a gaseous fluid may be controlled to which the fibrous non-woven is exposed. As illustrated in FIG. 5, a heating rate of the fibrous non-woven may be decreased compared to the heating phase 63 to maintain the fibrous non-woven at a temperature included in the recrystallization temperature range T_{r,2} for at least a pre-defined time. For illustration, the heating may be stopped in response to the fibrous non-woven reaching a temperature in which the second component of the binding fibers recrystallize. The gaseous fluid to which the fibrous non-woven is exposed may be heated to a temperature which is selected as a function of the recrystallization temperature range T_{r,2} of the second component of the binding fibers. If a binding agent other than the second component of the binding fibers is used, the heating rate of the fibrous non-woven may be decreased compared to the cooling phase 63 to maintain the fibrous non-woven at a temperature included in the recrystallization temperature range of the binding agent.

The temperature control in the controlled recrystallization phase 64 may be implemented in an energy efficient manner by passing a gaseous fluid through the fibrous non-woven. The temperature of the gaseous fluid may be adjusted in a control loop, in particular in a closed-loop control. The temperature of the gaseous fluid after passage through the fibrous non-woven may be measured and a heating device along which the gaseous fluid is passed may be controlled so as to ensure that the fibrous non-woven is maintained at a temperature within the recrystallization temperature range T_{r,2} during the controlled recrystallization phase.

In addition or as an alternative to temperature control, the humidity of the fibrous non-woven may also be controlled while the second component of the binding fibers recrystallizes. For illustration, a humidity of a gaseous fluid may be increased by supplying water droplets or water vapour into the gaseous fluid to which the fibrous non-woven is exposed. Supply of water droplets or water vapour may be performed continuously or intermittently in the controlled recrystallization phase 64. For illustration, water droplets or water vapour may be supplied intermittently in intervals 67, 68, e.g. after the heating phase 63 and prior to the final cooling phase 65. Water droplets or water vapour may be supplied to increase the air humidity. An open loop control or closed-loop control may be implemented. For illustration, a supply device which supplies water droplets or water vapour to the gaseous fluid before it is passed through the fibrous non-woven may be controlled as a function of the air humidity of the gaseous fluid. The supply device which supplies water droplets or water vapour to the gaseous fluid before it is passed through the fibrous non-woven may be controlled as a function of the air humidity of the gaseous fluid so as to ensure that a relative or absolute humidity remains greater than a threshold in the controlled recrystallization phase 64.

The humidity control may also be implemented in such a manner that, in the controlled recrystallization phase 64, the relative air humidity is reduced. In the controlled recrystallization phase 64, the relative air humidity may be set to be lower than a threshold, e.g. substantially 0%.

Control over conditions in which the recrystallization takes place in the controlled recrystallization phase 64 improves the resiliency characteristics of the product. In particular, products which have undergone the controlled recrystallization phase 64 are less prone to failing in a test according to DIN EN ISO 1856:2001-3 (March 2001) or according to DIN EN ISO 1856:2008-08 (August 2008) or other resiliency test than products which are quickly cooled through the recrystallization temperature range T_{r,2}, without exerting any control over ambient conditions of the fibrous non-woven in that time.

Subsequent to the controlled recrystallization phase 64, a further cooling phase 65 may be implemented. The product formed in the controlled recrystallization phase may be cooled to room temperature. Active cooling may, but does not need to be used to cool the product to room temperature.

The product formed by the processing explained with reference to FIG. 5 may undergo further post-processing. For illustration, the shape of the fibrous product may be modified using ultrasound or laser cutting techniques. Alternatively or additionally, trim channels may be formed. Alternatively or additionally, a cover material may be attached to the fibrous product. The fibrous product may be a cushion which is installed in a seat. The seat may be a vehicle seat or a seat of a furniture for office or residential use. Automobile seats, aircraft seats, or train seats are exemplary for seats in which the cushion may be installed.

As explained with reference to FIG. 4 and FIG. 5, absolute or relative humidity of a gaseous fluid which is passed through the fibrous non-woven may be controlled in addition or as an alternative to temperature control during controlled recrystallization.

FIG. 6 is a diagram representing an amount 70 of water entrained in a flow of gaseous fluid, e.g. air, which is passed through the fibrous non-woven. Water vapour or water droplets may be selectively entrained in the flow of gaseous fluid to increase the air humidity during the controlled recrystallization phase. Water vapour or water droplets may be selectively entrained in a continuous or intermittent fashion. For illustration, as indicated in FIG. 6, intermittent increases 71, 72 in humidity may be attained by selectively entraining water vapour or water droplets in a flow of gaseous fluid to which the fibrous non-woven is exposed.

In other embodiments, it may not be required to control the humidity during controlled recrystallization. For illustration, if the controlled recrystallization is performed in a geographic area having high air humidity, ambient air may be passed through the fibrous non-woven, with temperature control being performed as explained with reference to FIG. 4 and FIG. 5. Control over humidity may be omitted in such operating conditions.

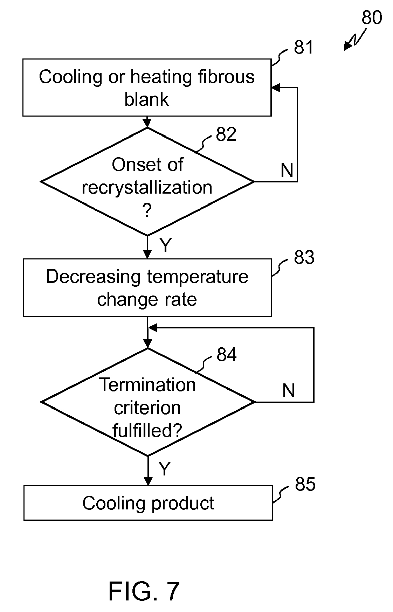

FIG. 7 is a flow chart of a method 80. The method 80 may be performed to process a fibrous non-woven into a fibrous product. The fibrous product may be a cushion configured for installation in a seat.

At 81, the fibrous non-woven may be cooled or heated. The fibrous non-woven may be cooled from a cross-linking temperature at which thermal cross-linking is effected, as explained with reference to FIG. 5. The fibrous non-woven may be heated from room temperature after it has been stored, for example.

At 82, it is determined whether an onset of recrystallization occurred. A core temperature of the fibrous non-woven may be monitored to determine whether the onset of recrystallization occurred. For illustration, a temperature of a gaseous fluid may be measured after the gaseous fluid passed through the fibrous non-woven. The temperature change of the gaseous fluid upon passage through the fibrous non-woven may be processed to determine the core temperature of the fibrous non-woven. Other techniques may be used to determine whether an onset of recrystallization occurred, such as open loop process control. Heating or cooling may be continued at 81 if the recrystallization has not started, yet.

At 83, in response to an onset of recrystallization, the temperature change rate may be adjusted. For illustration, the temperature change rate may be controlled such that it becomes less than a rate threshold, in order to maintain the fibrous non-woven at approximately the same temperature for at least a pre-defined time interval. Temperature control is thereby implemented while the second component of the binding fibers or another binding agent recrystallizes.

At 84, it is determined whether a termination criterion is fulfilled to stop the controlled recrystallization phase. The termination criterion may be based on time. For illustration, the controlled recrystallization phase may be stopped automatically after expiry of a pre-defined time. Alternatively or additionally, the termination criterion may be based on one or several characteristics of the fibrous product. For illustration, a crystallinity of the second component of the binding fibers may be used to determine whether the controlled recrystallization phase may be terminated. The controlled recrystallization phase may be continued if the termination criterion is not fulfilled.

At 85, after termination of the controlled recrystallization phase, the fibrous product may be cooled, e.g. actively by passing air through the product or passively by simply storing the fibrous product to let it cool down.

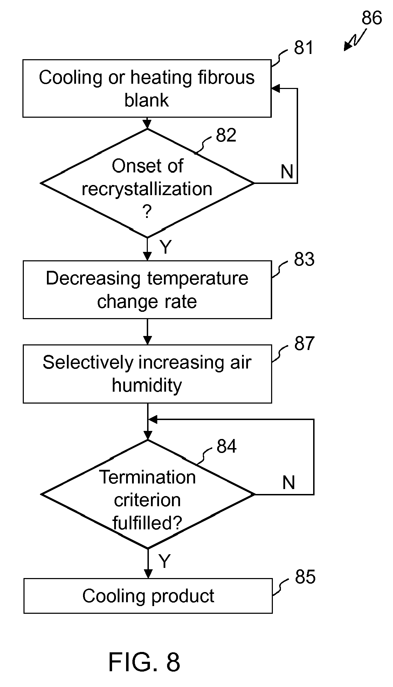

FIG. 8 is a flow chart of a method 86. The method 86 may be performed to process a fibrous non-woven into a fibrous product. The fibrous product may be a cushion configured for installation in a seat. Process control acts which may be implemented as described with reference to FIG. 7 are designated with the same reference numerals as in FIG. 7.

In the method 86, the humidity to which the fibrous non-woven is exposed is controlled during the controlled recrystallization phase. At 87, during the controlled recrystallization phase, the humidity may be selectively increased. To this end, water droplets or water vapour may be entrained in a flow of gaseous fluid which is passed through the fibrous non-woven. This may be done continuously during the controlled recrystallization or intermittently. For illustration, the air humidity of the gaseous fluid may be monitored before it is passed through the fibrous non-woven. If the air humidity reaches or falls below a humidity threshold, water droplets or water vapour may be entrained in the flow of gaseous fluid to increase the humidity of the atmosphere to which the fibrous non-woven is exposed during the controlled recrystallization phase.

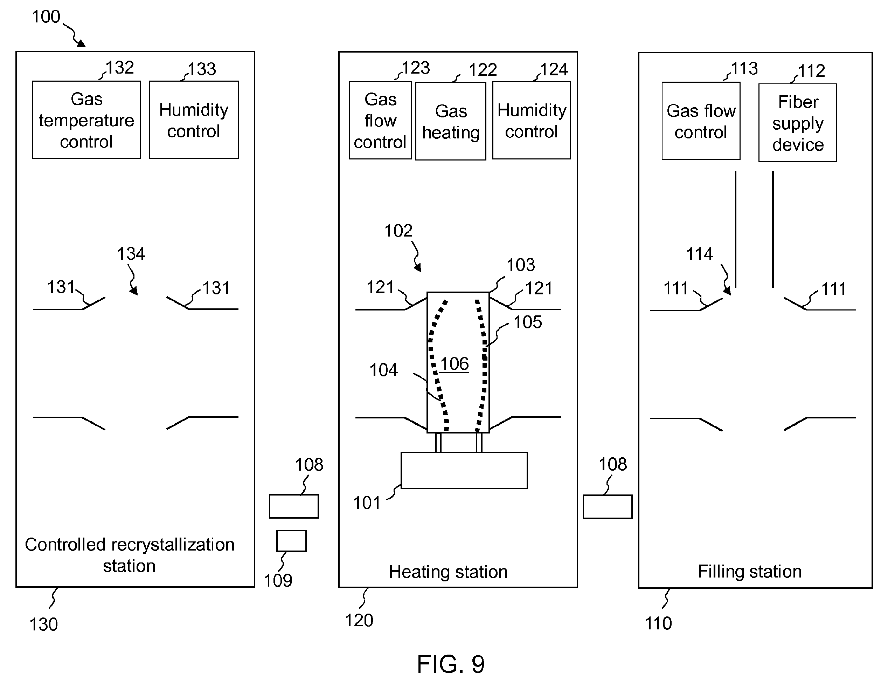

FIG. 9 is a schematic view of a system 100 for forming a fibrous product from loose fibers. The system comprises an apparatus for processing a fibrous non-woven into a fibrous product, which is implemented as a controlled recrystallization station 130 in the system 100.

The system 100 comprises a tool 102. The system 100 may comprise one or several processing stations. For illustration, the system 100 may comprise a filling station 10 in which fiber material is supplied into a cavity of the tool 102. The system 100 may comprise one or several thermal treatment stations for thermal treatment of the fiber material received in the cavity of the tool 102. The several treatment stations comprise a heating station 120 and a controlled recrystallization station 130.

The tool 102 may comprise a carrier 101. The tool 102 may comprise a pair of half molds 104, 105. The pair of half molds 104, 105 may define a receptacle 106 for receiving fibers therein. The pair of half molds 104, 105 may be attached to the carrier 101 via a frame 103.

The system 100 may comprise a transport mechanism 108 configured to couple to the carrier 101 of the tool. The transport mechanism 108 may be configured to displace the tool 102 between the various stations of the system 100. A control device 109 may be configured to control the transport mechanism 108 to effect a displacement of the tool 102 which is coordinated with operation of the filling station 110, the heating station 120, and the controlled recrystallization station 130.

The filling station 110 may be configured to fill a fiber material which comprises a blend of binding fibers and filling fibers into a mold of the tool 102. The filling station 110 may comprise a fiber supply device 112 which supplies the fibers. The fiber supply device 112 may comprise a cutting device. The cutting device may be configured to cut one or several yarns into segments and to separate the filaments of the cut yarn segments, to thereby provide the fibers.

The filling station 110 may comprise a gas flow control device 113. The gas flow control device 113 may be configured to pass a flow of gas through the fibers received in the mold of the tool 102, to thereby orient the fibers. The gas flow control device 113 may be configured to control the fiber orientation of loose fibers inserted into the mold of the tool 102 in such a manner that, in at least a portion of the cavity 106, at least 50% of the fibers are oriented at an angle of less than 45° from a main load direction.

The filling station 110 may comprise a receptacle 114 in which the tool may be received. An adapter 111 may couple gas ducts of the filling station 110 to the mold of the tool 102 when the tool 102 is received in the receptacle 114.

The heating station 120 may be configured to thermally activate the binding fibers for thermal cross-linking. The heating station 120 may comprise a heating station adapter 121 configured to couple at least one gas duct of the heating station 120 to the mold of the tool 102 when the tool 102 is positioned at a receptacle of the heating station 120. The heating station 120 may comprise a heating device 122 for heating a gas, and a gas flow control device 123 for controlling a gas flow through the mold when the tool 102 is positioned at the heating station 120. A humidity control device 124 may optionally be provided to control a humidity of the gas which is passed through the fibers in the mold to effect thermal cross-linking.

The controlled recrystallization station 130 is configured to control ambient conditions of an atmosphere to which the fibrous non-woven is exposed during the recrystallization of the second component of the binding fibers. The controlled recrystallization station 130 may be configured to maintain the fibrous non-woven at a temperature which is included in a recrystallization temperature range in which the second component of the binding fibers recrystallizes. The controlled recrystallization station 130 may be configured to add water droplets or water vapor to a gaseous fluid to which the blank is exposed while the second component of the binding fibers recrystallizes.

The controlled recrystallization station 130 may comprise a heating station adapter 131 configured to couple at least one gas duct of the controlled recrystallization station 130 to the mold of the tool 102 when the tool 102 is positioned at a receptacle 134 of the controlled recrystallization station 130.

The controlled recrystallization station 130 may comprise a gas temperature control device 132 configured to control a temperature of a gaseous fluid before the gaseous fluid is passed through the fibrous non-woven in the mold of the tool 102. The gas temperature control device 132 may heat or cool the gaseous fluid in an open or closed loop control, so as to maintain the fibrous non-woven at a temperature which is included in a recrystallization temperature range in which the second component of the binding fibers recrystallizes.

The controlled recrystallization station 130 may comprise a humidity control device 133 configured to control a humidity of a gaseous fluid before the gaseous fluid is passed through the fibrous non-woven in the mold of the tool 102. The humidity control device 133 may be configured to selectively add water droplets or water vapor to the gaseous fluid before the gaseous fluid is passed through the fibrous non-woven. The amount of water droplets or water vapor discharged into the gaseous fluid may be adjusted in an open loop or closed loop control performed by the humidity control device 133.

An additional cooling station may be provided to cool the fibrous non-woven removed from the heating station 120 before it is supplied to the control recrystallization station 130.

The transport mechanism 108 may position the tool 102 sequentially at the filling station 110, at the heating station 120, and at the controlled recrystallization station 130. In each operating cycle, the tool 102 may be positioned at least once at each one of filling station 110, the heating station 120, and the controlled recrystallization station 130. More complex motion patterns for the tool 102 may be implemented, e.g. by implementing a reciprocating movement between two or more thermal treatment stations.

The system 100 may comprise additional stations. For illustration, one or several posttreatment stations may be provided for modifying the product after it has been cooled down. Alternatively or additionally, more than two thermal treatment stations may be provided.

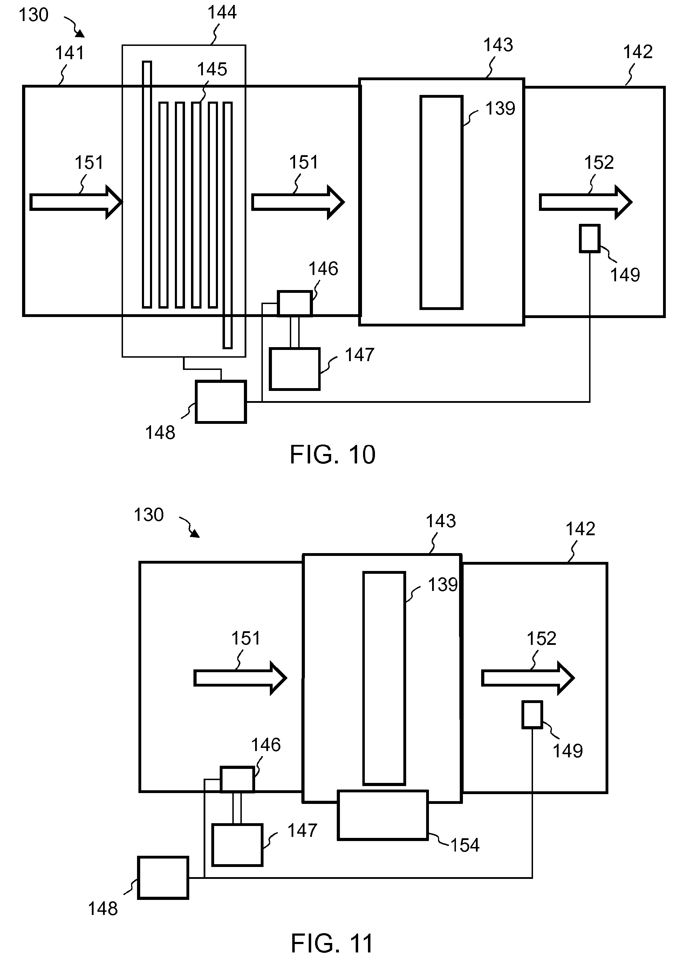

FIG. 10 is a schematic diagram of an apparatus for processing a fibrous non-woven into a product by performing a controlled recrystallization process. The apparatus may be used as the controlled recrystallization station 130 in the system 100 of FIG. 9. The apparatus may be configured to perform the method according to any one of the embodiments disclosed herein.

The apparatus 130 comprises a receptacle 143 in which a fibrous non-woven 139 may be positioned. The receptacle 143 may be configured to receive the fibrous non-woven 139 while the fibrous non-woven is still retained in a mold. The receptacle 143 may be configured to receive the fibrous non-woven 139 after it had been removed from a mold.

The apparatus 130 is configured to pass a flow of gaseous fluid through the fibrous non-woven 139. The apparatus may comprise a gas inlet duct 141 and a gas outlet duct 142. The gas inlet duct 141 and the gas outlet duct 142 may be configured for fluid communication with the receptacle 143 in which the fibrous non-woven 139 is received.

In order to maintain a core temperature of the fibrous non-woven 139 at a temperature within a recrystallization temperature range, the apparatus 130 comprises a temperature control device 144. The temperature control device 140 is arranged in a flow path of the gaseous fluid 151 to heat or cool the gaseous fluid 151 before it is passed through the fibrous non-woven 139. The temperature control device 140 may comprise heating elements 145 which may include any one or any combination of electrical heating elements, a heat exchanger structure or tubular elements through which heating or cooling fluid may be passed.

The apparatus 130 comprises a control device 148. The control device 148 may be configured to control the temperature control device 140 to maintain the core temperature of the fibrous non-woven 139 at a temperature within a recrystallization temperature range. The control device 148 may be configured to perform an open loop temperature control. For illustration, the temperature control device 140 may be activated by the control device 148 in accordance with a pre-defined process control. The control device 148 may be configured to perform a closed loop temperature control. For illustration, a sensor 149 may be positioned in the gas outlet duct 142. The control device 148 may determine, based on the gas temperature measured by the sensor 149 in the gas outlet duct 142 and/or based on a temperature difference between the gas in the gas inlet duct 141 and in the gas outlet duct 142, whether the core temperature of the fibrous non-woven 139 is within the recrystallization temperature range. If the core temperature of the fibrous non-woven 139 is about to exceed the recrystallization temperature range, an output power of the heat control device 144 may be reduced. If the core temperature of the fibrous non-woven 139 is about to fall below the recrystallization temperature range, an output power of the heat control device 144 may be increased. Other control techniques may be employed.

In order to selectively supply humidity to the fibrous non-woven 139 during recrystallization, the apparatus 130 may comprise a humidity supply device 146. The humidity supply device 146 may be connected to a water reservoir 147. The humidity supply device 147 may be configured to selectively output water vapor or to atomize water to output water droplets for entrainment in the flow 151 of gas supplied to the fibrous non-woven 139.

The control device 148 may be configured to control the humidity supply device 146. The control device 148 may be coupled to a sensor (not shown) which measures the humidity of the gas 151 before it is passed through the fibrous non-woven. The control device 148 may control the humidity supply device 146 to selectively increase the humidity. The control device 148 may be configured to perform an open loop humidity control. For illustration, humidity supply device 146 may be activated by the control device 148 in accordance with a pre-defined process control. The control device 148 may be configured to perform a closed humidity temperature control. For illustration, a humidity sensor (not shown) may be positioned in the gas inlet duct 141. The control device 148 may activate the humidity supply device 146 to selectively increase the humidity of the gaseous fluid before it is passed through the fibrous non-woven 139 if the humidity sensed by the humidity sensor reaches or falls below a humidity threshold.

FIG. 11 is a schematic diagram of an apparatus for processing a fibrous non-woven into a product by performing a controlled recrystallization process. The apparatus may be used as the controlled recrystallization station 130 in the system 100 of FIG. 9. The apparatus may be configured to perform the method according to any one of the embodiments disclosed herein.

The apparatus 130 may comprise a control device 148 and a humidity control device 146 which may be operative as explained with reference to FIG. 10.

The apparatus 130 may comprise a temperature control device for controlling a temperature of the fibrous non-woven during recrystallization. The temperature control device may comprise a source 154 of electromagnetic radiation.

The control device 148 may be configured to control the temperature control device 140 to maintain the core temperature of the fibrous non-woven 139 at a temperature within a recrystallization temperature range. The control device 148 may be configured to perform an open loop temperature control. For illustration, the source 154 of electromagnetic radiation may be activated by the control device 148 in accordance with a pre-defined process control. The control device 148 may be configured to perform a closed loop temperature control. For illustration, a sensor 149 may be positioned in the gas outlet duct 142. The control device 148 may determine, based on the gas temperature measured by the sensor 149 in the gas outlet duct 142 and/or based on a temperature difference between the gas in the gas inlet duct 141 and in the gas outlet duct 142, whether the core temperature of the fibrous non-woven 139 is within the recrystallization temperature range. If the core temperature of the fibrous non-woven 139 is about to exceed the recrystallization temperature range, an output power of the source 154 of electromagnetic radiation may be reduced. If the core temperature of the fibrous non-woven 139 is about to fall below the recrystallization temperature range, an output power of the source 154 of electromagnetic radiation may be increased. Other control techniques may be employed.

Modifications and alterations may be implemented in apparatuses according to other embodiments. For illustration, a controlled recrystallization process may be implemented by performing temperature control only, by performing humidity control only, or by controlling additional or alternative ambient parameters.

In the methods, apparatuses and systems according to any one of the embodiments disclosed herein, a process control may be performed in dependence on a recrystallization temperature range in which a binding agent recrystallizes which was previously activated for thermal cross-linking of fibers. The binding agent may be the low-melt component of binding fibers, for example, or a binding agent which is separate from the fibers.

In the methods, apparatuses and systems according to any one of the embodiments disclosed herein, the process control may be performed in dependence on the recrystallization temperature range determined by means of differential scanning calorimetry (DSC). The process control may be performed in dependence on the recrystallization temperature range determined by means of differential scanning calorimetry at a heating and cooling rate of at least 1 K/min. The process control may be performed in dependence on the recrystallization temperature range determined by means of differential scanning calorimetry at a heating and cooling rate of 5 K/min or more than 5 K/min.

FIG. 12 illustrates the determination of the recrystallization temperature range by means of DSC. FIG. 12 shows a DSC heating curve 160 obtained when heating a sample of binding fibers in a DSC device. The DSC heating curve 160 has a first dip 161 representing the melting of the first component of the binding fiber, which is the high melt component. The DSC heating curve 160 has a second dip 162 representing the melting of the second component of the binding fiber, which is the low melt component.

In methods according to embodiments, a cross-linking temperature T_{cl} to which the fibers are heated to effect thermal cross-linking may be selected such that it is greater than the maximum temperature of the temperature range in which the second component of the binding fiber melts and that it is less than a minimum temperature of the temperature range in which the first component of the binding fiber melts. The temperature ranges may be respectively determined by DSC at a heating rate of at least 1 K/min, in particular at a heating rate of 5 K/min or more than 5 K/min.

FIG. 12 shows a DSC cooling curve 170 obtained when cooling the sample of binding fibers in a DSC device after heating the sample. The DSC cooling curve 170 has a first peak 171 representing the recrystallization of the first component of the binding fiber, which is the high melt component. The DSC cooling curve 170 has a second peak 172 representing the recrystallization of the second component of the binding fiber, which is the low melt component. The minimum temperature to which the second peak 172 extends defines a minimum temperature of the recrystallization temperature range, designated as T_{r-min,2} herein. The maximum temperature to which the second peak 172 extends defines a maximum temperature of the recrystallization temperature range, designated as T_{r-max,2} herein.

The controlled recrystallization performed in the methods and apparatuses according to embodiments improves resiliency characteristics of a fibrous product, e.g. a fiber cushion body, produced from a fibrous non-woven. Exemplary results obtained for fibrous products according to embodiments will be illustrated in more detail with reference to FIG. 13 to FIG. 18 below.

FIG. 13 to FIG. 18 respectively demonstrate how a post-curing according to an embodiment affects the recovery from a deformation after the fibrous product was subjected to a load. The data of FIG. 13 were obtained for a test according to DIN EN ISO 1856:2001-3 (March 2001) for an enlarged specimen size of 100 mm × 100 mm × 45 mm. All other parameters correspond to the parameters specified by method A of DIN EN ISO 1856:2001-3 (March 2001).

In the test, the specimens were compressed by 50% in the height direction while being positioned for a time period of 22 hours at climate conditions of a temperature of 70°C and a relative air humidity of less than 10%. The conditioning and recovery were performed at a temperature of (23 ± 2)°C and at a relative air humidity of (50 ± 5)%.

All test data illustrated in FIG. 13 to FIG. 18 were obtained for specimens formed from fiber blends of Polyamide (PA). The test data illustrated in FIG. 13 to FIG. 18 were obtained for a fiber blend in which the fibrous non-woven is formed of matrix fibers of PA6 and binding fibers having a core of PA6 and a sheath of CoPA.

The test data explained with reference to FIG. 13 to FIG. 18 illustrates the degree of recovery after a specimen of the fiber product was subjected to a load at an elevated temperature. This is a typical scenario which may occur for vehicle seating, for example, when an occupant is seated on an aircraft, automobile, bus, train or other vehicle seat for an extended period and the interior temperature of the vehicle is high. In such cases, it would be desirable for the remaining deformation after 30 minutes, 1 hour, and 2 hours, respectively, to be less than 12%, even more preferably less than 10% of the original height. As used herein, the remaining deformation is the decrease in height that persists after the load had been removed for 30 minutes, 1 hour, and 2 hours, the decrease being measured compared to the original height. A percentage deformation indicates the decrease in height divided by the original height of the specimen.

As will be explained in more detail below, the post-curing performed in accordance with methods and apparatuses according to embodiments improves the resiliency characteristics of the fibrous product. In more detail, for tests which are performed to quantify the recovery of the fibrous product after it has been subjected to a load at elevated temperature, the fibrous products produced in accordance with embodiments provide better performance than those which were not tempered to effect a recrystallization. The test method A of DIN EN ISO 1856:2001-3 (March 2001), for which results will be explained in more detail below, is exemplary for such a test. The results reproduced in FIG. 13 to FIG. 18 were obtained using test method A of DIN EN ISO 1856:2001-3 (March 2001) for an enlarged specimen size of 100 mm × 100 mm × 45 mm. All other parameters correspond to the parameters specified by method A of DIN EN ISO 1856:2001-3 (March 2001)..

As will be explained in more detail below, the improved resiliency characteristics may be attained irrespective of whether the fibrous non-woven is maintained at temperatures in the recrystallization temperature range while it is being cooled down after thermal activation or whether the fibrous product is first cooled down to room temperature prior to heating it up again to a temperature in the recrystallization temperature range. As will be explained in more detail below, the improved resiliency characteristics may in particular be attained using a temperature and/or humidity control, in which ambient conditions of the fibrous product are controlled as a function of the recrystallization temperature of a low-melt component of a binding fiber.

FIG. 13 shows results of a resiliency test performed on fibrous products produced using a method and apparatus according to an embodiment in comparison to results of the same test performed on a fibrous product which was not tempered. FIG. 13 shows the remaining deformation, measured as a decrease in height divided by the original height of the specimen, as a function of time after the load has been removed from the specimen.

FIG. 13 shows the deformation of a specimen subjected to a load under the conditions described above, measured at times of 30 min, 1 h and 2 h after the load was removed. The deformation is given as percentile, determined as difference to the original height of the specimen and divided by the original height of the specimen. Each specimen consists of a blend of fibers consisting of matrix fibers of PA6, the matrix fibers having a mass per length of 16.7 dtex, and binding fibers which are PA6/CoPA bi-component fibers, having a core of PA6 and a sheath of CoPA and having a mass per length of 17.0 dtex.

FIG. 13 shows the data 182-184 obtained for a specimen from a fibrous product which was produced by post-curing the fibrous non-woven by heating it up to a temperature in the recrystallization temperature range of the sheath of the binding fiber after it had been cooled down to temperatures below the recrystallization temperature range. This post-curing technique was generally explained with reference to FIG. 5 above. During the period in which the fibrous non-woven was maintained at the temperature in the recrystallization temperature range, indicated at 66 in FIG. 5, the atmosphere was dry, i.e., the relative air humidity was substantially 0%.

For the fiber blend of the specimens for which the data of FIG. 13 was obtained, the post-curing was performed at a temperature of 100°C, which is within the recrystallization temperature range of the sheath of the binding fiber. Other post-curing temperatures may be used in other embodiments, e.g. to accommodate different recrystallization temperature ranges of different fiber blends.

Different data 182-184 were obtained depending on the duration for which the fibrous non-woven was tempered in the recrystallization temperature range. Data 182 were obtained for a post-curing in which the fibrous non-woven was kept at a temperature in the recrystallization temperature range for 1 hour. Data 183 were obtained for a post-curing in which the fibrous non-woven was kept at a temperature in the recrystallization temperature range for 2 hours. Data 184 were obtained for a post-curing in which the fibrous non-woven was kept at a temperature in the recrystallization temperature range for 4 hours.

Data 181 shows comparative data obtained for a fibrous non-woven which does not undergo the post-curing in which it is maintained at a temperature in the recrystallization temperature range, i.e., in which the temperature control phases 63-65 of FIG. 5 were omitted. The comparative data 181 were obtained by a cooling process in which ambient air was passed through the product. The ambient air had a temperature of between 15°C and 30°C and a relative air humidity of between 25% and 75%. The cooling process used for the product on which the comparative data 181 were obtained causes the product to quickly cool from thermal activation temperatures down to ambient temperatures, without any controlled recrystallization being performed by tempering the product.

As illustrated in FIG. 13, the post-curing according to embodiments consistently reduces the remaining deformation in the test compared to a specimen which did not undergo post-curing. After 30 minutes, the specimen post-cured in the recrystallization temperature range for 1 hour showed a remaining deformation of 11.9%. The specimen post-cured in the recrystallization temperature range for 2 hours showed a remaining deformation of 10.6%. The specimen post-cured in the recrystallization temperature range for 4 hours showed a remaining deformation of 9.4%. The specimen which was not produced in accordance with an embodiment, i.e., without any post-curing, showed a much larger remaining deformation of 16.7%.

Generally, in the automotive industry, values of less than 12%, or even better less than 10%, at 30 minutes would be preferred. The post-curing according improves the performance of the fibrous product according to an embodiment.

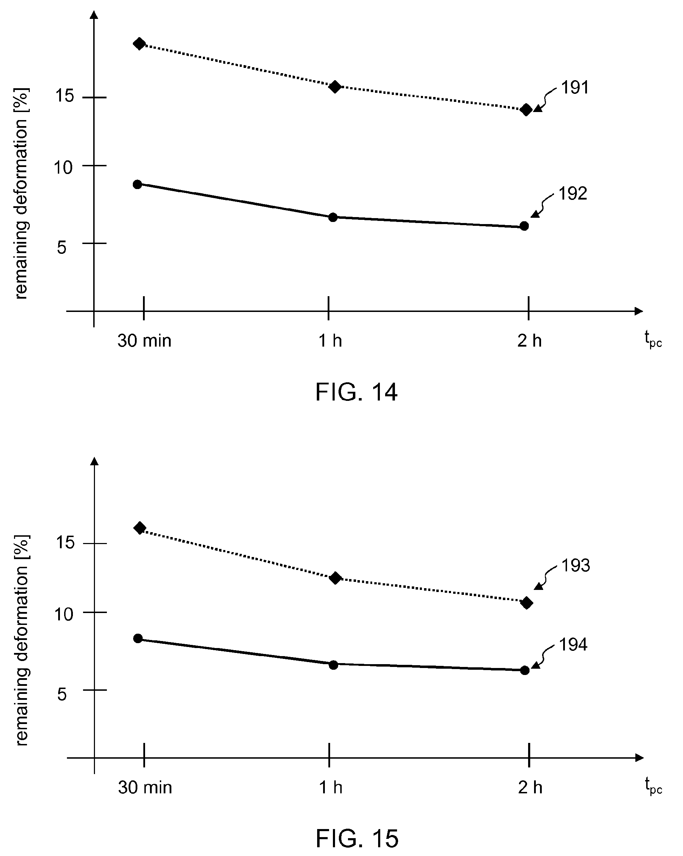

Improved recovery in response to loading of the fibrous product may be consistently obtained for a wide variety of different temperature profiles under which the fibrous non-woven was formed prior to post-curing. FIG. 14 to FIG. 16 exemplarily illustrate data obtained for a specimen from a fibrous product which has undergone post-curing in accordance with an embodiment in comparison with specimens which have not undergone post-curing, respectively determined for different cooling conditions in phase 63 of the process illustrated in FIG. 5.

FIG. 14 to FIG. 16 show results of a resiliency test performed on fibrous products produced using a method and apparatus according to an embodiment in comparison to results of the same test performed on a fibrous product which was not tempered. FIG. 14 to FIG. 16 show the remaining deformation, measured as a decrease in height divided by the original height of the specimen, as a function of time after the load has been removed from the specimen.

FIG. 14 to FIG. 16 show the deformation of a specimen subjected to a load under the conditions described above, measured at times of 30 min, 1 h and 2 h after the load was removed. The deformation is given as percentile, determined as difference to the original height of the specimen and divided by the original height of the specimen. Each specimen consists of a blend of fibers consisting of matrix fibers of PA6, the matrix fibers having a mass per length of 16.7 dtex and a round cross section, and binding fibers which are PA6/CoPA bi-component fibers, having a core of PA6 and a sheath of CoPA and having a mass per length of 8.0 dtex and having a trilobal shape.

FIG. 14 to FIG. 16 show the data 192, 194, 196 obtained for a specimen from a fibrous product which was produced by post-curing the fibrous non-woven by heating it up to a temperature in the recrystallization temperature range of the sheath of the binding fiber after it had been cooled down to temperatures below the recrystallization temperature range. This post-curing technique was generally explained with reference to FIG. 5 above. During the period in which the fibrous non-woven was maintained at the temperature in the recrystallization temperature range, indicated at 66 in FIG. 5, the atmosphere was dry, i.e., the relative air humidity was substantially 0%. The post-curing was respectively performed for 4 hours.

For the fiber blend of the specimens for which the data 192, 194, 196 of FIG. 14 to FIG. 16 was obtained, the post-curing was performed at a temperature of 100°C, which is within the recrystallization temperature range of the sheath of the binding fiber. Other post-curing temperatures may be used in other embodiments, e.g. to accommodate different recrystallization temperature ranges of different fiber blends.

Data 191, 193, 195 respectively show the resultant remaining deformation in a test conducted as described above for specimens which did not undergo the post-curing at the recrystallization temperature. The comparative data 191, 193, 195 were obtained by a cooling process in which ambient air was passed through the product. The ambient air had a temperature of between 15°C and 30°C and a relative air humidity of between 25% and 75%. The cooling process used for the product on which the comparative data 191, 193, 195 were obtained causes the product to quickly cool from thermal activation temperatures down to ambient temperatures, without any controlled recrystallization being performed by tempering the product.

FIG. 14 shows data 192 obtained for a specimen which was post-cured for 4 hours. In the resiliency test, the remaining deformation relative to the original height was 8.9% for the fibrous product produced in accordance with an embodiment. The comparative data 191 obtained for a specimen which was not post-cured had a remaining deformation relative to the original height of 18.4%. Both specimens were obtained using the same thermal activation cycle, in which the specimens were cooled down in a pre-defined, standardized cooling profile at phase 63 of the process of FIG. 5 by passing air having a temperature of 70°C through the product. The product on which the comparative data 191 was not heated up to the recrystallization temperature range again, while the product on which the data 192 was post-cured in the recrystallization temperature range.

FIG. 15 shows data 194 obtained for a specimen which was post-cured for 4 hours. In the resiliency test, the remaining deformation relative to the original height was 8.1% for the fibrous product produced in accordance with an embodiment. The comparative data 193 obtained for a specimen which was not post-cured had a remaining deformation relative to the original height of 16.0%. Both specimens were obtained using the same thermal activation cycle, in which the specimens were cooled down at phase 63 of the process of FIG. 5 with air having a temperature of 70°C while the relative air humidity was approximately 0%. Compared to the process of forming the fibrous non-woven of FIG. 14, both the cooling rate and the air humidity was changed. The post-curing still shows a consistent improvement of the resiliency characteristics.

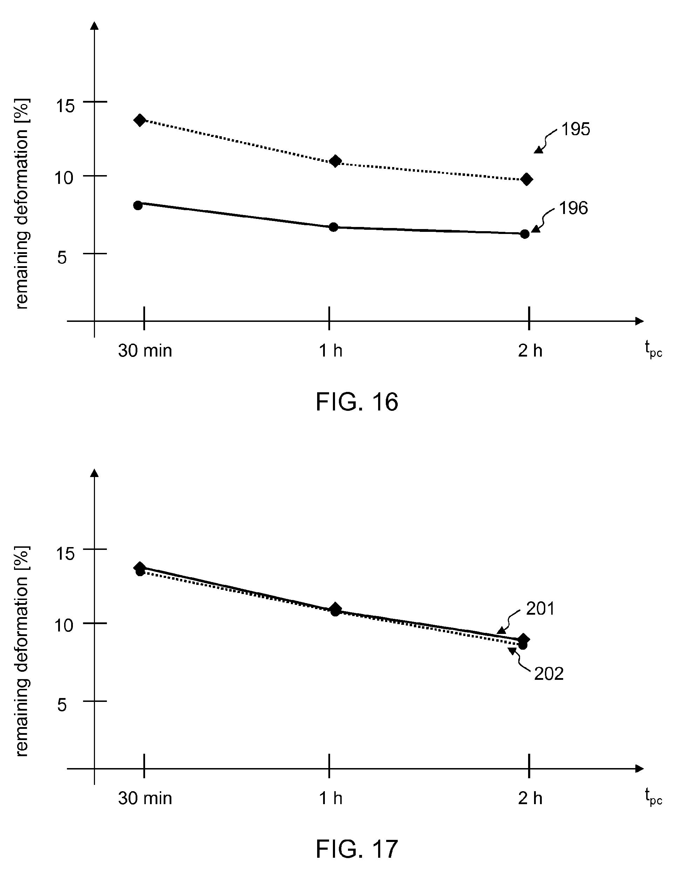

FIG. 16 shows data 196 obtained for a specimen which was post-cured for 4 hours. In the resiliency test, the remaining deformation relative to the original height was 7.8% for the fibrous product produced in accordance with an embodiment. The comparative data 195 obtained for a specimen which was not post-cured had a remaining deformation relative to the original height of 14.1%. Both specimens were obtained using the same thermal activation cycle, in which the specimens were cooled down at phase 63 of the process of FIG. 5 with air having a temperature of 70°C while the relative air humidity respectively was set to the maximum value, which varied throughout the cooling process in accordance with the respective temperature. Compared to the process of forming the fibrous non-woven of FIG. 15, the air humidity was changed. The post-curing still shows a consistent improvement of the resiliency characteristics.

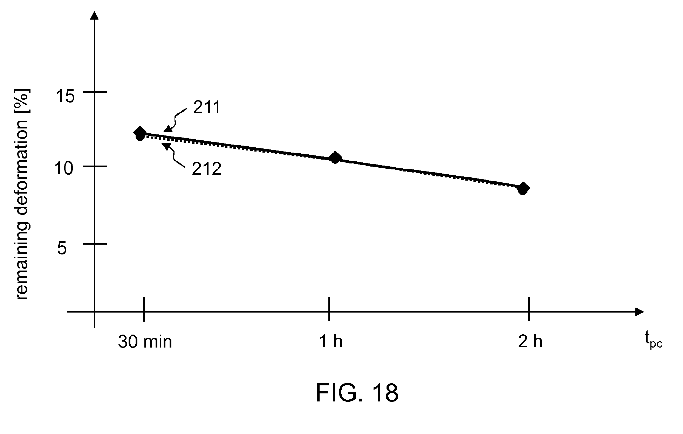

The improvement in resiliency characteristics which is obtained by the post-curing is attained both when the controlled recrystallization is performed in a post-curing phase after cool-down to temperatures below the recrystallization temperature range, as explained for a process control as generally illustrated in FIG. 5, and when the controlled recrystallization is integrated into the cool-down phase of the fibrous non-woven before the fibrous non-woven is cooled down to temperatures below the recrystallization temperature range, as explained for a process control as generally illustrated in FIG. 4 or FIG. 6. This will be explained in more detail with reference to FIG. 17 and FIG. 18.

FIG. 17 and FIG. 18 respectively compare data 201, 211 obtained for a specimen from a fibrous product for which the post-curing was performed during the cooling process, as explained with reference to FIG. 4 or FIG. 6, and data 202, 212 obtained for a specimen from a fibrous product for which the post-curing is performed as a separate post-curing phase, as explained with reference to FIG. 5.

The specimens of FIG. 17 consist of a blend of fibers consisting of matrix fibers of PA6, the matrix fibers having a mass per length of 16.7 dtex and a round cross section, and binding fibers which are PA6/CoPA bi-component fibers, having a core of PA6 and a sheath of CoPA and having a mass per length of 17.0 dtex.

The data 202, 212 were obtained for specimens which were post-cured by heating up the specimen to 100°C at 0% relative air humidity for four hours after the specimen had been allowed to cool down to 23°C. The data 201, 211 were obtained for specimens which had been post-cured in the cooling process from thermal activation temperature to room temperature, with the cooling rate being decreased as illustrated at 54 in FIG. 4 or FIG. 6 to allow the recrystallization to be performed in a controlled way.

Different cooling rates were used for the data shown in FIG. 17 and the data shown in FIG. 18. The data 201, 211 were obtained for specimens which had been obtained by a slow cooling by passing air having a temperature within the recrystallization temperature range T_{r,2} or slightly less than the lower boundary temperature T_{r-low,2} of the recrystallization temperature range T_{r,2} shown in FIG. 6 through the cross-linked fiber material. For illustration, for the fiber blends consisting of matrix fibers of PA6, the matrix fibers having a mass per length of 16.7 dtex and a round cross section, and binding fibers which are PA6/CoPA bi-component fibers, having a core of PA6 and a sheath of CoPA and having a mass per length of 17.0 dtex, good recovery rates are obtained when cooling is performed by passing a gas having a temperature of between 60°C and 80°C and a relative humidity of between 60% and 70% through the blank of cross-linked fiber material. Other temperatures and humidity ranges are applied for other fiber blends. Suitable parameters may respectively be established using DSC, for example.

As illustrated, the post-curing integrated into the cooling process after thermal activation of the binding fibers improves the resiliency characteristics in a manner which is similar to the improvement obtained by a separate post-curing step, while making production of the fibrous product even more energy-efficient.

Both when a controlled recrystallization is performed by a separate post-curing step and when the controlled recrystallization is performed while the fibrous non-woven is being cooled down and the cooling profile is set as a function of the temperature range in which the low-melt component of the binding fiber recrystallizes, the resiliency characteristics measured as explained above improves compared to specimens in which no controlled recrystallization was performed.

In methods according to embodiments, a controlled recrystallization is performed in which a core temperature of the fibrous non-woven is maintained at a temperature included in the recrystallization temperature range. The core temperature may be set such that it is higher than the minimum temperature of the recrystallization temperature range and less than the maximum temperature of the recrystallization temperature range.

While embodiments of the invention have been described with reference to the drawings, alterations and modifications may be implemented in other embodiments. For illustration, while temperature and/or humidity of the fibrous non-woven may be controlled during recrystallization, alternative or additional parameters may also be controlled.

While the humidity may be selectively increased in the controlled recrystallization phase, water vapor or water droplets may be supplied also when the fibrous non-woven is formed by thermal cross-linking.

While methods and apparatuses for processing a fibrous non-woven into a fibrous product may be integrated into a system in which the fibrous non-woven is formed, the controlled recrystallization may also be performed separately from the formation of the fibrous non-woven. For illustration, the fibrous non-woven may be stored and/or transported before it is subjected to the controlled recrystallization.

The methods, apparatuses and systems may be used for improving resiliency characteristics of a fibrous product compare to those of the fibrous non-woven from which the product is formed. The methods, apparatuses and systems may in particular be used in processes of forming fiber cushions, without being limited thereto.

## Claims

1. A method of producing a product from a fibrous non-woven which is formed from cross-linked fibers, the method comprising:
controlling at least one ambient condition of the fibrous non-woven during a recrystallization (54, 64) of a material (42) comprised by the fibrous non-woven.

2. The method of claim 1,
wherein controlling the at least one ambient condition comprises:
controlling at least one parameter of a fluid to which the fibrous non-woven is exposed during the recrystallization.

3. The method of claim 2,
wherein controlling the at least one parameter of the fluid comprises:
controlling a temperature of the fluid to which the fibrous non-woven is exposed.

4. The method of claim 3,
wherein the temperature of the fluid is controlled in dependence on a recrystallization temperature range (T_{r,2}) in which the material (42) comprised by the fibrous non-woven recrystallizes.

5. The method of any one of claims 2 to 4,
wherein a rate of change of the temperature of the fluid is controlled in dependence on a blank temperature of the fibrous non-woven.

6. The method of any one of claims 2 to 5,
wherein controlling the at least one parameter comprises:
controlling an amount of water vapour or a rate at which water vapour is supplied to the fluid to which the fibrous non-woven is exposed.

7. The method of any one of claims 2 to 6,
wherein the fluid comprises a gas, in particular air.

8. The method of any one of the preceding claims,
wherein controlling the at least one ambient condition comprises:
controlling a radiation source which supplies electromagnetic radiation to the fibrous non-woven.

9. The method of any one of the preceding claims,
wherein the fibers comprise binding fibers (40), each binding fiber (40) respectively comprising a first component (41) and a second component (42), the second component (42) having a melting temperature which is lower than a melting temperature of the first component (41),
wherein the at least one ambient condition is controlled in dependence on a recrystallization temperature range (T_{r,2}) in which the second component of the binding fibers recrystallizes.

10. The method of claim 9,
wherein the second component (42) at least partially surrounds the first component (41).

11. The method of any one of the preceding claims,
wherein controlling the at least one ambient condition comprises:
controlling a rate of change of a blank temperature (50, 60) of the fibrous non-woven.

12. The method of claim 11,
wherein controlling the rate of change of the blank temperature comprises:
selectively decreasing the rate of change of the blank temperature (60) in response to an onset of the recrystallization.

13. The method of any one of claims 1 to 12,
wherein controlling the at least one ambient parameter during the recrystallization is performed prior to cooling (55) the fibrous non-woven to a temperature lower than a minimum temperature (T_{r-low,2}) of a recrystallization temperature range (Tᵣ) in which the material recrystallizes.

14. The method of any one of claims 1 to 12, further comprising:
cooling (61) the fibrous non-woven to a temperature lower than a minimum temperature (T_{r-low,2}) of a recrystallization temperature range (Tᵣ) in which the material recrystallizes; and
subsequently heating (63) the fibrous non-woven to a temperature higher than the minimum temperature of the recrystallization temperature range (Tᵣ) to control the at least one ambient parameter.

15. The method of claim 13 or claim 14,
wherein the recrystallization temperature range (Tᵣ) is determined by differential scanning calorimetry.

16. The method of any one of the preceding claims,
wherein the cross-linked fibers have a preferential orientation along a main load direction (2) in at least a portion (5) of the fibrous non-woven.

17. The method of any one of the preceding claims,
wherein the product (1) is a cushion.

18. A method of producing a cushion from fibers, comprising:
supplying fibers into a mold (104, 105),
thermally activating at least a fraction of the fibers to produce a fibrous non-woven which is formed from cross-linked fibers, wherein the fibers have a preferential orientation along a main load direction (2) in at least a portion (5) of the fibrous non-woven, and
producing a cushion from the fibrous non-woven using the method of any one of the preceding claims.

19. Cushion (1), produced using the method of any one of claims 1 to 18.

20. An apparatus for forming a product from a fibrous non-woven, comprising:
a receptacle (134) to receive the fibrous non-woven comprising cross-linked fibers; and
a control system (132, 133) configured to control at least one ambient condition of the fibrous non-woven during a recrystallization of a material (42) comprised by the fibrous non-woven.
